# EUROPÄISCHE PATENTSCHRIFT

(11) **EP 0 384 111 B1**
(45) Veröffentlichungstag und Bekanntmachung des Hinweises auf die Patenterteilung: **03.11.1993**
(21) Anmeldenummer: 90100580.1
(22) Anmeldetag: 12.01.1990
(51) Int. Cl.: F16F 13/00, B60G 7/02

(54) **Fahrwerkslager**
Support for a set of wheels
Support de train de roues

(30) Priorität: 24.02.1989 DE 3905868
(43) Veröffentlichungstag der Anmeldung: 29.08.1990
(73) Patentinhaber: METZELER GIMETALL AG, D-80992 München (DE)
(72) Erfinder: Sauer, Wolfgang, Dr., D-5412 Ransbach (DE)
(74) Vertreter: Seibert, Hannelore

(56) Entgegenhaltungen:
- EP-A- 0 236 199
- EP-A- 0 287 455
- DE-A- 2 410 813
- DE-A- 2 647 298

## Beschreibung

Die Erfindung bezieht sich auf ein Fahrwerkslager, insbesondere für die Hinterachse eines Kraftfahrzeuges, mit einem angenähert kegelstumpfförmigen Gummikörper, der im Chassis halterbar ist und eine zentrale, innenliegende Buchse mit einem darin geführten Bolzen aufweist, der an seinen Enden über eine Gabelkonstruktion an die Radaufhängung anlenkbar ist.

Ein derartiges Fahrwerkslager ist aus der DE-A-24 10 813 bekannt. Damit können Schwingungen der Hinterachse bzw. der Radaufhängung gedämpft werden, wobei die Dämpfung allein durch inherente Eigenschaften des elastomeren Materials entsteht. Selbst wenn beim vorgenannten Stand der Technik im Innern des Gummikörpers und die zentrale Buchse umschließend eine mittig geteilte Flüssigkeitskammer mit einer Überströmöffnung zwischen den beiden Kammern vorgesehen ist, ist hierdurch nur ein geringer Dämpfungseffekt zu erzielen.

Zum Stand der Technik gehören auch hydraulisch dämpfende Zweikammerlager, wie sie beispielsweise aus der DE-A-29 06 282 zur Motorlagerung bekannt sind. Diese Zweikammerlager lassen je nach Bauform und insbesondere Länge des Überströmkanals eine gezielte Dämpfung bestimmter Amplituden bei niedrigsten Frequenzen zu.

Demgegenüber liegt der vorliegenden Anmeldung die Aufgabe zugrunde, ein gattungsgemäßes Fahrwerkslager so zu gestalten und zu ertüchtigen, daß damit eine höhere Dämpfungsarbeit und insbesondere eine Bedämpfung von Anregungsamplituden von 1 bis 3 mm zwischen 2 und 6 Hz möglich ist, wie sie bei Schwingungen derartiger Fahrwerkskomponenten am häufigsten vorkommen.

Zur Lösung dieser Aufgabe ist erfindungsgemäß vorgesehen, daß an die Unterseite des Gummikörpers als modulares Bauteil ein hydraulisch dämpfendes Lagerteil mit zwei über einen Überströmkanal miteinander verbundenen Flüssigkeitskammern in Form einer Arbeitskammer und einer Ausgleichskammer angesetzt ist, wobei das Lagerteil ein äußeres zylindrisches Gehäuse aufweist, das an der unteren Außenkante des Gummikörpers angeflanscht ist und die zentrale Buchse mit einer etwa der Länge des Gehäuses aufweisenden axialen Verlängerung versehen ist, an deren Stirnseite eine starre Platte von geringerem Durchmesser als dem des Gehäuses angeflanscht ist, und daß der Spalt zwischen Gehäuse und Außenumfang der Platte von zwei parallelen, ringförmigen und in axialer Richtung mit Abstand zueinander geführten Gummiwandungen überbrückt ist derart, daß die Arbeitskammer von der Unterseite des Gummikörpers, von der starren Platte sowie der ersten der beiden Gummiwandungen und die Ausgleichskammer im wesentlichen von den beiden Gummiwandungen in axialer Richtung begrenzt sind, zwischen denen der untere Auslaß des Überströmkanals einmündet. Bei der beschriebenen Kombination eines herkömmlichen Fahrwerklagers mit einem praktisch als Moduleinheit angesetzten hydraulisch dämpfenden Lager läßt sich dabei auf einfache Weise ein herkömmliches Buchsenlager derart ertüchtigen, daß die an der Hinterachse am häufigsten auftretenden Schwingungsanregungen gezielt gedämpft werden können.

Zweckmäßig ist es dabei, wenn der Überströmkanal mehrwendelig ausgeführt ist und auf der Innenseite des Gehäuses des Lagers verläuft.

Ferner ist es zweckmäßig, wenn die außenliegende Gummiwandung als flexibler, elastisch nachgiebiger stirnseitiger Abschluß zwischen Gehäuse und starrer Platte angeordnet und die innenliegende Gummiwandung als kegelmantelförmige Tragfeder zwischen starrer Platte und Innenwandung des Überströmkanals ausgebildet sind.

Um eine möglichst große Länge mit großem Querschnitt des Überströmkanals zu erhalten ist es zweckmäßig, wenn der Überströmkanal durch zwei ringförmige Kanalteile mit U-förmigem, nach außen offenen Querschnitt gebildet ist, die mit der offenen Seite an der Innenwandung des Gehäuses festgelegt sind und der obere Kanalteil eine schräg nach innen gerichtete Eintrittsöffnung und der untere Kanalteil eine schräg nach innen gerichtete Austrittsöffnung sowie die zwischen den Teilkanälen verlaufenden Trennwände eine Verbindungsöffnung für die hydraulische Flüsigkeit aufweisen.

Anhand einer schematischen Zeichnung sind Aufbau und Funktionsweise eines Ausführungsbeispiels nach der Erfindung näher erläutert.

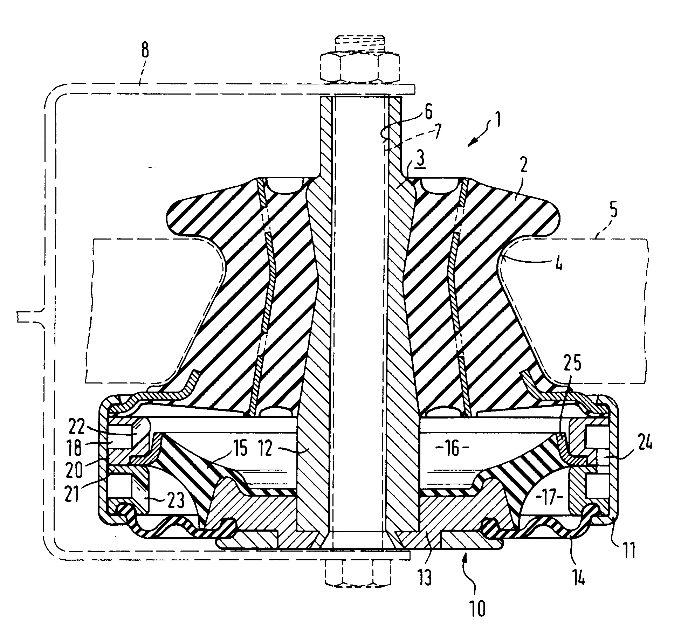

Dabei zeigt die einzige Figur einen Längsschnitt durch ein derartiges Fahrwerkslager.

Wie man aus der Zeichnung ersieht, weist das Fahrwerkslager, das üblicherweise als vorderes Lager an der Hinterachse eines hinterradgetriebenen Kraftfahrzeuges eingesetzt wird, zunächst ein herkömmliches Buchsenlager 1 auf, das aus einem angenähert kegelstumpfförmigen Gummikörper 2 und einer zentralen Buchse 3 besteht. Der Gummikörper 2 ist dabei im Bereich einer Einschnürung 4 im Chassis 5 des Fahrzeugs als Festpunkt radial eingespannt. Ein Schraubenbolzen 7, der durch die zentrale Bohrung 6 der Buchse 3 geführt ist, verbindet dieselbe über eine Gabelkonstruktion 8 mit der nicht näher dargestellten Hinterradaufhängung.

Dieses Lager wird in der dargestellten vertikalen Richtung eingebaut, wobei die statische Vorlast in Fahrzeughochrichtung, also in der Figur nach oben gerichtet ist, womit sich auch die Buchse nach oben schiebt.

Eine Dämpfungswirkung gegen auftretende Kippschwingungen der Hinterradaufhängung ist dabei nur durch die inhärente Materialdämpfung dieser Buchse möglich.

Um nun aber auch besonders störende und häufig auftretende Anregungsamplituden in der Größenordnung von 1 bis 3 mm zwischen 2 und 6 Hz gezielt bedämpfen zu können, ist vorgesehen, dieses konventionelle Buchsenlager 1 um eine, auf diese speziellen Anforderungen einstellbare hydraulische Dämpfung zu ergänzen. Dies erfolgt durch die Kombination mit einem abgewandelten hydraulisch dämpfenden Zweikammerlager 10, das praktisch als module Baueinheit an das Buchsenlager 1 angesetzt bzw. in dieses integriert ist.

Dazu ist am äußeren unteren Ende des Gummikörpers 2 ein zylindrisches Gehäuse 11 angeflanscht und die Buchse 3 nach unten um einen Ansatz 12 von der Länge des Gehäuses 10 verlängert. Der Buchsenansatz 12 trägt an seiner Stirnseite eine horizontal verlaufende Platte 13, deren Außendurchmesser geringer ist als der Durchmesser des Gehäuses 11 und etwa die Hälfte bis 2/3 desselben beträgt. Der stirnseitige offene Spalt zwischen Gehäuse 11 und Platte 13 ist nunmehr mit einer membranartigen, weichelastischen Gummiwandung 14 überbrückt und dichtend verschlossen. Darüber hinaus ist innerhalb der so gebildeten Kammer zwischen dem Außenumfang der Platte 13 und etwa der mittleren Höhe des Gehäuses 11 eine weitere schräg angestellte Gummiwandung 15 als hydraulische Tragfeder angeordnet, die etwa die Form eines Kegelstumpfmantels und die Härte des Gummikörpers 2 aufweisen kann.

Damit werden durch diese hydraulische Tragfeder 15 zwei mit einer hydraulischen Flüssigkeit gefüllte Kammern abgetrennt, und zwar die Arbeitskammer 16 und die Ausgleichskammer 17, die über einen langen Übertrömkanal 18 miteinander in Verbindung stehen.

Dieser Überströmkanal 18 wird nach dem dargestellten Ausführungsbeispiel gebildet durch zwei ringförmige Kanalteile 20 und 21 mit dem Querschnitt eines liegenden, nach außen offenen U, die mit der offenen Seite an der Innenwandung des Gehäuses 11 angesetzt sind. Dabei weist der obere Kanalteil 20 eine schräg nach innen gerichtete Einlaßöffnung 22 zur Arbeitskammer 16 und der untere Kanalteil 21 eine ebenfalls schräg nach innen gerichtete Auslaßöffnung 23 zur Ausgleichskammer 17 auf. Oberer und unterer Kanalteil stehen dabei über eine Verbindungsöffnung 24 miteinander in Verbindung. Selbstverständlich müssen dabei Ein- und Austrittsöffnung 22 und 23 sowie Verbindungsöffnung 24 nicht auf der in der Zeichnung dargestellten Umfangsstelle liegen, sondern können entsprechend der geforderten Länge des Überströmkanals 18 beliebig einander zugeordnet sein.

Bei dieser Gestaltung des Überströmkanals 18 ist es dann auch zweckmäßig, wenn die Tragfeder 15 am äußeren Umfang über einen anvulkanisierten Winkelring 25 zwischen den beiden Kanalteilen 20 und 21 als äußerer Fixpunkt festgelegt ist.

Mit der beschriebenen Gestaltung ergibt sich also einmal eine sehr kompakte Bauweise, wobei das hydraulisch dämpfende Lagerteil praktisch als Moduleinheit an ein herkömmliches Buchsenlager angesetzt werden kann. Bei Anregungsamplituden von 1 bis 3 mm ergibt sich ein hoher hydraulischer Dämpfungseffekt mit einem maximalen Phasenwinkel von größer 30° bei 4 Hz. Diese Abstimmung wird dabei erreicht durch einen sehr langen Überströmkanal 18, der auf dem größtmöglichen Durchmesser liegt und wegen seiner praktisch zweifachen Wendelung ein Längen- zu Durchmesserverhältnis von bis zu 120 erreichen kann. Maßgebend ist ferner die hohe Volumensteifigkeit des herkömmlichen Gummikörpers 2 und der hydraulischen Tragfeder 15 sowie deren großen effektiver Querschnitt. Bei einer Einfederung ergibt sich einerseits durch das Verdrängungsvolumen der hydraulischen Tragfeder und andererseits durch das freiwerdende Volumen der konventionellen Gummifeder ein hinreichend großer Volumenstrom durch den Überströmkanal 18, wodurch die hohe Dämpfung erreicht wird.

## Patentansprüche

1. Fahrwerkslager, insbesondere für die Hinterachse eines Kraftfahrzeuges, mit einem angenähert kegelstumpfförmigen Gummikörper (2), der im Chassis (5) halterbar ist und eine zentrale, innenliegende Buchse (3) mit einem darin geführten Bolzen (7) aufweist, der an seinen Enden über eine Gabelkonstruktion (8) an die Radaufhängung anlenkbar ist, dadurch gekennzeichnet, daß an die Unterseite des Gummikörpers (2) als modulares Bauteil ein hydraulisch dämpfendes Lagerteil (10) mit zwei über einen Überströmkanal (18) miteinander verbundenen Flüssigkeitskammern in Form einer Arbeitskammer (16) und einer Ausgleichskammer (17) angesetzt ist, wobei das Lagerteil (10) ein äußeres zylindrisches Gehäuse (11) aufweist, das an der unteren Außenkante des Gummikörpers (2) angeflanscht ist und die zentrale Buchse (3) mit einer etwa der Länge des Gehäuses (11) aufweisenden axialen Verlängerung (12) versehen ist, an deren Stirnseite eine starre Platte (13) von geringerem Durchmesser als dem des Gehäuses (11) angeflanscht ist, und daß der Spalt zwischen Gehäuse (11) und Außenumfang der Platte (13) von zwei parallelen, ringförmigen und in axialer Richtung mit Abstand zueinander geführten Gummiwandungen (14, 15) überbrückt ist derart, daß die Arbeitskammer (16) von der Unterseite des Gummikörpers (2), von der starren Platte (13) sowie der ersten (15) der beiden Gummiwandungen (15, 16) und die Ausgleichskammer (17) im wesentlichen von den beiden Gummiwandungen (15, 16) in axialer Richtung begrenzt sind, zwischen denen der untere Auslaß (23) des Überströmkanals (18) einmündet.

2. Fahrwerkslager nach Anspruch 1, dadurch gekennzeichnet, daß der Überströmkanal (18) mehrwendelig ausgeführt ist und auf der Innenseite des Gehäuses (11) des Lagers (10) verläuft.

3. Fahrwerkslager nach Anspruch 1, dadurch gekennzeichnet, daß die außenliegende Gummiwandung (14) als flexibler, elastisch nachgiebiger, stirnseitiger Abschluß zwischen Gehäuse (11) und starrer Platte (13) angeordnet und die innenliegende Gummiwandung (15) als kegelmantelförmige Tragfeder zwischen starrer Platte (13) und Innenwandung des Überströmkanals (18) ausgebildet sind.

4. Fahrwerkslager nach Anspruch 2, dadurch gekennzeichnet, daß der Überströmkanal (18) durch zwei ringförmige Kanalteile (20, 21) mit U-förmigem, nach außen offenem Querschnitt gebildet ist, die mit der offenen Seite an der Innenwandung des Gehäuses (11) festgelegt sind, und daß der obere Kanalteil (20) eine schräg nach innen gerichtete Eintrittsöffnung (22) und der untere Kanalteil (21) eine schräg nach innen gerichtete Austrittsöffnung (23) sowie die zwischen den Kanalteilen (20, 21) verlaufenden Trennwände eine Verbindungsöffnung (24) für die hydraulische Flüssigkeit aufweisen.

5. Fahrwerkslager nach Anspruch 3, dadurch gekennzeichnet, daß die Tragfeder (15) an ihrem Außenumfang zwischen den beiden Kanalteilen (20, 21) festgelegt ist.

## Claims

1. Undercarriage bearing, in particular for the rear axle of a motor vehicle, having an approximately frustoconical rubber body (2) mountable in the chassis (5), and having a central, internal bush (3) with a bolt (7) guided therein, which bearing is attachable at its ends to the wheel suspension via a fork construction (8), characterised in that a hydraulically damping bearing part (10) with two fluid chambers - in the form of a working chamber (16) and an equalising chamber (17) intercommunicating via an overflow channel (18) - is attached as a modular component to the under-side of the rubber body (2), the bearing part (10) having an outer cylindrical housing (11) flanged on to the lower outer edge of the rubber body (2) and the central bush (3) being provided with an axial extension (12) - having the approximate length of the housing (11) - to the end face of which a rigid plate (13) of smaller diameter than the housing (11) is flanged on, and in that the gap between the housing (11) and the outer circumference of the plate (13) is bridged by two parallel, annular rubber walls (14, 15) guided spaced apart in the axial direction, in such a manner that the working chamber (16) is defined in the axial direction by the under-side of the rubber body (2), the rigid plate (13) and the first (15) of the two rubber walls (15, 16), and the equalising chamber (17) is axially defined essentially by the two rubber walls (15, 16), between which the lower outlet (23) of the overflow channel (18) opens out.

2. Undercarriage bearing according to claim 1, characterised in that the overflow channel (18) has multiple coils and extends along the inside of the housing (11) of the bearing (10).

3. Undercarriage bearing according to claim 1, characterised in that the outermost rubber wall (14) is formed as a flexible, resilient, end-face cover disposed between the housing (11) and the rigid plate (13), and the innermost rubber wall (15) is formed as a hollow conical support spring between the rigid plate (13) and the inner wall of the overflow channel (18).

4. Undercarriage bearing according to claim 2, characterised in that the overflow channel (18) is formed by two annular channel parts (20, 21), which have an outward-facing U-shaped cross-section and are fixed with the open end to the inner wall of the housing (11), and in that the upper channel part (20) has an inlet aperture (22) oriented obliquely inwards, and the lower channel part (21) has an outlet aperture (23) oriented obliquely inwards, and the partition walls running between the partial channels (20, 21) have a connecting aperture (24) for the hydraulic fluid.

5. Undercarriage bearing according to claim 3, characterised in that the support spring (15) is fixed at its outer circumference between the two channel parts (20, 21).

## Revendications

1. Support de suspension, notamment pour l'essieu arrière d'un véhicule automobile, comprenant une pièce (2) en caoutchouc de forme sensiblement tronconique, pouvant être maintenue dans un châssis (5) et comportant un manchon (3) intérieur central dans lequel passe un axe (7) dont les extrémités peuvent s'articuler à la suspension de roue par un agencement à fourche (8), caractérisé en ce qu'une partie de support (10), à amortissement hydraulique et ayant deux chambres à liquide, sous la forme d'une chambre de travail (16) et d'une chambre de compensation (17), communiquant entre elles par un canal de passage (18), est appliquée, en tant qu'élément modulaire, à la face inférieure de la pièce (2) en caoutchouc, la partie de support (10) comportant une enveloppe (11), cylindrique extérieure, qui est bridée au bord extérieur inférieur de la pièce (2) en caoutchouc et le manchon (3) central étant muni d'un prolongement (12) axial, qui a sensiblement la longueur de l'enveloppe (11) et à la face frontale duquel est bridé un plateau (13) rigide de moindre diamètre que celui de l'enveloppe (11), et en ce que l'intervalle entre l'enveloppe (11) et le pourtour extérieur du plateau (13) est recouvert de deux parois (14, 15) en caoutchouc, parallèles, annulaires et à distance l'une de l'autre dans la direction axiale de manière que la chambre de travail (16) soit délimitée par la face inférieure de la pièce (2) en caoutchouc, par le plateau (13) rigide ainsi que par la première (15) des deux parois (15, 16) en caoutchouc et que la chambre de compensation (17) soit délimitée en direction axiale sensiblement par les deux parois (15, 16) en caoutchouc entre lesquelles débouche la sortie (23) inférieure du canal de passage (18).

2. Support de suspension suivant la revendication 1, caractérisé en ce que le canal de passage (18) est constitué de plusieurs tours d'hélice et s'étend sur la face intérieure de l'enveloppe (11) du support (10).

3. Support de suspension suivant la revendication 1, caractérisé en ce que la paroi (14) extérieure en caoutchouc est constituée sous la forme d'une fermeture, du côté frontal, qui est souple, qui cède élastiquement et qui est disposée entre l'enveloppe (11) et le plateau (13) rigide, et la paroi (15) intérieure en caoutchouc est constituée sous la forme d'un ressort-support de surface latérale conique, interposé entre le plateau (13) rigide et la paroi intérieure du canal de passage (18).

4. Support de suspension suivant la revendication 2, caractérisé en ce que le canal de passage (18) est formé de deux tronçons (20, 21) de canal annulaire, de section transversale en forme de U ouverte vers l'extérieur, qui sont fixés par la face ouverte à la paroi intérieure de l'enveloppe (11), et en ce que le tronçon (20) supérieur de canal comporte un orifice (22) d'entrée incliné vers l'intérieur et le tronçon (21) inférieur de canal, un orifice (23) de sortie incliné vers l'intérieur, les cloisons s'étendant entre les deux tronçons (20, 21) de canal comportant un orifice (24) de mise en communication pour le liquide hydraulique.

5. Support de suspension suivant la revendication 3, caractérisé en ce que le ressort support (15) est fixé sur son pourtour extérieur entre les deux tronçons (20, 21) de canal.
